# EUROPÄISCHE PATENTANMELDUNG

(11) **EP 1 842 709 A2**
(43) Veröffentlichungstag der Anmeldung: **10.10.2007**
(21) Anmeldenummer: 07006122.1
(22) Anmeldetag: 24.03.2007
(51) Int. Cl.: B60J 7/12

(54) **Verstellbares Fahrzeugdach**

(30) Priorität: 07.04.2006 DE 102006016853
(71) Anmelder: Magna Car Top Systems GmbH, 74321 Bietigheim-Bissingen (DE)
(72) Erfinder: Kostadinov, Metodi, 70176 Stuttgart (DE)

(57) **Zusammenfassung**

Ein verstellbares Fahrzeugdach weist mindestens ein an eine karosserieseitig angeschlagene Dachkinematik gekoppeltes Dachteil auf, das zwischen einer den Fahrzeuginnenraum überdeckenden Schließposition und einer Ablageposition zu verstellen ist. Des Weiteren ist ein schwenkbar gelagerter Hutablagedeckel vorgesehen, der über eine Koppelkinematik an die Dachkinematik angebunden ist und einen Verbindungslenker umfasst, der schwenkbar mit dem Hutablagedeckel verbunden ist, wobei die Koppelkinematik bei der Überführung des Daches zwischen Schließ- und Ablageposition eine Strecklage durchläuft. Der Hutablagedeckel ist um ein karosserieseitiges Drehgelenk aufschwenkbar, wobei die Koppelkinematik ausschließlich über Drehgelenke gekoppelte Lenker umfasst und im kinematischen Übertragungsweg zwischen Hutablagedeckel und Dachkinematik höchstens drei Lenker angeordnet sind.

## Beschreibung

Die Erfindung bezieht sich auf ein verstellbares Fahrzeugdach mit mindestens einem Dachteil, das an eine karosserieseitig angeschlagene Dachkinematik gekoppelt und zwischen einer den Fahrzeuginnenraum überdeckenden Schließposition und einer heckseitigen Ablageposition zu verstellen ist, nach dem Oberbegriff des Anspruches 1.

In der DE 103 31 987 A1 wird ein Fahrzeugdach für ein Cabriolet-Fahrzeug beschrieben, das zwischen einer den Fahrzeuginnenraum überdeckenden Schließposition und einer Ablageposition zu verstellen ist, in der die Dachteile in einem heckseitigen Verdeckkasten abgelegt sind. Dieser Verdeckkasten ist von einem Verdeckkastendeckel zu verschließen, der zum Ablegen und Schließen des Fahrzeugdaches aus seiner geschlossenen Position angehoben werden muss, um einen Durchtritt für die Dachteile freizugeben. Der Verdeckkastendeckel ist kinematisch über einen Verbindungslenker und einen hiermit gekoppelten Übertragungslenker mit einem Hauptlenker der Dachkinematik verbunden, wobei der Verbindungslenker und der Übertragungslenker eine kinematische Kette bilden, so dass eine Bewegung des Hauptlenkers um dessen karosserieseitiges Drehgelenk zwangsläufig zu einer Bewegungsübertragung auf den Verdeckkastendeckel führt und der Verdeckkastendeckel um sein karosserieseitiges Drehgelenk angehoben wird. Der Verdeckkastendeckel weist an seinen Seitenkanten eine sich in Fahrzeuglängsrichtung erstreckende Kulissenbahn auf, in der ein Zapfen des Verbindungslenkers gleitend gelagert ist. Sobald die Dachkinematik durch eine Betätigung eines Antriebsgliedes bewegt wird, führt der Verbindungslenker eine Schwenkbewegung um ein karosserieseitiges Drehgelenk aus, wobei der Zapfen in der Kulissenbahn am Verdeckkastendeckel entlang geführt und hierdurch der Verdeckkastendeckel angehoben wird.

Die Bewegungsübertragung von der Dachkinematik über die Koppelkinematik auf den Verdeckkastendeckel setzt eine Kulissenführung im Seitenbereich des Verdeckkastendeckels voraus.

Ein kinematisch mit der Dachkinematik gekoppelter Verdeckkastendeckel, der zugleich als Hutablagedeckel fungiert und bei geschlossenem Fahrzeugdach sich unterhalb des hinteren Dachteils im Fahrzeuginnenraum erstreckt, ist aus der DE 101 17 767 A1 bekannt. Die Koppelkinematik, über die der Verdeckkastendeckel mit der Dachkinematik zwangsgekoppelt ist, ist als Übertotpunktkinematik ausgeführt, die bei der Überführung des Fahrzeugdaches zwischen Schließ- und Ablageposition eine Totpunktlage überschreitet, woraufhin die Aufschwenkbewegung des Verdeckkastendeckels zum Freigeben eines Durchtritts in den Verdeckkasten hinein umgekehrt und der Verdeckkastendeckel wieder geschlossen wird. Die Koppelkinematik ist jedoch kompliziert aufgebaut und umfasst insgesamt sechs Hebel bzw. Lenker zur Bewegungssteuerung des Verdeckkastendeckels. Zunächst wird die Schwenkbewegung des Hauptlenkers der Dachkinematik über einen drehfest angeordneten Hebel auf einen weiteren Zwischenhebel übertragen, der schwenkbar mit einem karosserieseitig gelagerten Koppelhebel verbunden ist, welcher wiederum gelenkig mit einem Übertragungshebel verbunden ist, der zur Verdeckkastendeckelkinematik gehört. Des Weiteren ist ein karosserieseitig gelagerter Steuerungshebel vorgesehen, der schwenkbar mit dem Übertragungshebel der Verdeckkastendeckelkinematik verbunden ist. Die in der DE 101 17 767 A1 offenbarte Koppelkinematik erfordert einen großen kinematischen und konstruktiven Aufwand.

Der Erfindung liegt das Problem zugrunde, bei einem verstellbaren Fahrzeugdach mit einfachen konstruktiven Maßnahmen die Bewegung eines Hutablagedeckels kinematisch an die Ablage- bzw. Schließbewegung des Daches zu koppeln.

Diese Aufgabe wird erfindungsgemäß mit den Merkmalen des Anspruches 1 gelöst. Die Unteransprüche geben zweckmäßige Weiterbildungen an.

Erfindungsgemäß ist vorgesehen, dass die Koppelkinematik, über die die Bewegung der Dachkinematik auf den Hutablagedeckel übertragen wird, ausschließlich Lenker umfasst, die über Drehgelenke untereinander bzw. mit der Dachkinematik und dem Hutablagedeckel verbunden sind. Im Übertragungsweg zwischen der Dachkinematik und dem Hutablagedeckel sind hierbei maximal drei Lenker angeordnet, wobei ein an die Hutablage unmittelbar schwenkbar gekoppelter Verbindungslenker, der Bestandteil der Koppelkinematik ist, bei der Überführung zwischen der Schließ- und der Ablageposition eine Streck- bzw. Totpunktlage durchläuft.

Diese Ausführung weist verschiedene Vorteile auf. Zum einen können klein bauende Kinematiken realisiert werden, da aufgrund der Verwendung ausschließlich drehbarer Lenker nur ein verhältnismäßig geringer Platzbedarf und auch nur ein verhältnismäßig kleiner Bewegungsraum für die Koppelkinematik erforderlich ist. Translatorische Verschiebungen, die einen erhöhten Platzbedarf erforderten, und/oder aufwändig gestaltete Kulissenführungen sind nicht erforderlich. Zum anderen wird gegenüber den Ausführungen aus dem Stand der Technik eine konstruktive Vereinfachung durch die Drehkopplung der Lenker untereinander bzw. mit dem Hutablagedeckel und der Dachkinematik erreicht.

Gemäß einer ersten bevorzugten Ausführung besteht die Koppelkinematik ausschließlich aus dem Verbindungslenker, der einenends über ein Drehgelenk schwenkbar mit dem Hutablagedeckel und anderenends über ein weiteres Drehgelenk schwenkbar mit einem Bauteil der Dachkinematik verbunden ist, insbesondere mit einem Hauptlenker der Dachkinematik. Diese Ausführung stellt die einfachste konstruktive Realisierung mit der Minimalanzahl an beweglichen Bauteilen dar.

Gemäß einer zweiten bevorzugten Ausführung umfasst die Koppelkinematik zusätzlich zum Verbindungslenker einen Koppellenker, der einenends schwenkbar mit dem Verbindungslenker und anderenends schwenkbar mit einem Bauteil der Dachkinematik verbunden ist. Für eine eindeutig festgelegte Bewegungsübertragung kann es vorteilhaft sein, den Koppellenker an einem karosserieseitigen Drehgelenk abzustützen, beispielsweise mittels eines Stützlenkers, oder den Koppellenker selbst unmittelbar über ein karosserieseitiges Drehgelenk zu lagern.

Der an die Dachkinematik gekoppelte Lenker der Koppelkinematik greift vorteilhaft mit Abstand zum karosserieseitigen Drehgelenk des Hauptlenkers der Dachkinematik an, so dass die Hebelbewegung zwischen der karosseriefesten Drehachse des Hauptlenkers und dem Drehgelenk zur Koppelkinematik als Steuerbewegung für den Hutablagedeckel fungiert. Der Verbindungs- oder Koppellenker der Koppelkinematik greift vorteilhaft unmittelbar am Hauptlenker der Dachkinematik an; alternativ hierzu ist es aber auch möglich, die Anbindung der Koppelkinematik über einen weiteren Hebel bzw. Lenker der Dachkinematik herzustellen.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines abklappbaren Fahrzeugdaches in einem Cabriolet-Fahrzeug, dargestellt im geschlossenen, den Fahrzeuginnenraum überdeckenden Zustand,
- Fig. 2: eine Seitenansicht auf einen Hauptlenker der Dachkinematik des Daches, dargestellt im geschlossenen Zustand, mit einem Hutablagedeckel, der sich unmittelbar unterhalb des hinteren Dachteiles befindet und über eine Koppelkinematik, bestehend aus einem Verbindungslenker, an den Hauptlenker der Dachkinematik kinematisch zwangsgekoppelt ist,
- Fig. 3: ein Fig. 2 entsprechender Ausschnitt aus Dach- und Koppelkinematik sowie Hutablagedeckel, jedoch zu Beginn der Überführungsbewegung von der Schließ- in die Ablageposition, bei der der Hutablagedeckel um sein karosserieseitiges Drehgelenk aufgeschwenkt ist,
- Fig. 4: die Kinematik in einer in Richtung Ablageposition weiter fortgeschrittenen Situation, bei der die beiden Drehgelenke am Verbindungslenker und das karosserieseitige Drehgelenk des Hauptlenkers der Dachkinematik in einer Strecklage stehen,
- Fig. 5: die Kinematik in der Ablageposition mit im Verdeckkasten abgelegtem Hauptlenker, wobei der Hutablagedeckel wieder seine horizontale Ausgangsposition einnimmt,
- Fig. 6: eine schematische Darstellung des Hutablagedeckels bei geschlossenem und bei abgelegtem Dach, wobei in beiden Situationen der Hutablagedeckel die gleiche Position einnimmt,

- Fig. 7: der Hutablagedeckel, wiederum dargestellt in Ablage- und in Schließposition des Fahrzeugdaches, wobei in Ablageposition (strichliert dargestellt) der Hutablagedeckel höher liegt als in Schließposition,
- Fig. 8: der Hutablagedeckel in Schließ- und in Ablageposition, wobei in Ablageposition (strichliert dargestellt) der Hutablagedeckel unterhalb der Schließposition liegt,
- Fig. 9 bis 13: ein weiteres Ausführungsbeispiel für eine Koppelkinematik, über die die Bewegung eines Hauptlenkers der Dachkinematik auf den Hutablagedeckel übertragen wird, wobei die Koppelkinematik insgesamt drei schwenkbar gelagerte Lenker umfasst, dargestellt zwischen der Schließposition (Fig. 9) und der Ablageposition (Fig. 13),
- Fig. 14 bis 19: ein weiteres Ausführungsbeispiel einer Koppelkinematik, über die die Bewegung des Hauptlenkers der Dachkinematik auf den Hutablagedeckel übertragen wird, dargestellt zwischen der Schließposition (Fig. 14) und der Ablageposition (Fig. 19).

In den Figuren sind gleiche Bauteile mit gleichen Bezugszeichen versehen.

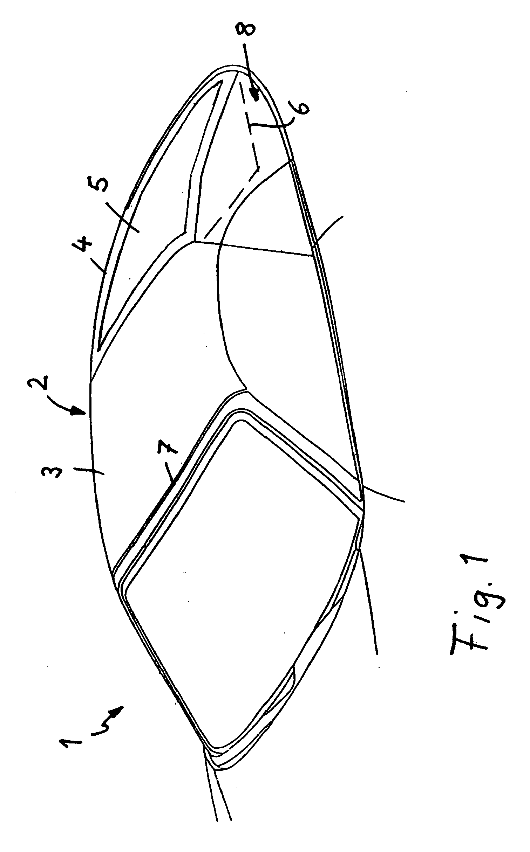

Das in Fig. 1 dargestellte Cabriolet-Fahrzeug 1 weist ein Hardtop-Fahrzeugdach 2 auf, das ein vorderes, starres Dachteil 3 und ein hinteres, starres Dachteil 4 mit darin aufgenommener Heckscheibe 5 umfasst. Das Fahrzeugdach befindet sich in seiner Schließposition, in der das vordere Dachteil 3 an einen Windschutzscheibenrahmen angrenzt. Das Hardtop-Fahrzeugdach 2 besteht im Ausführungsbeispiel aus zwei starren Dachteilen, wobei gegebenenfalls auch mehr als zwei Dachteile vorgesehen sein können. Im Rahmen der Erfindung kommt auch ein Softtop mit einem Verdeckbezugstoff, der auf ein Verdeckgestänge aufgespannt ist, in Betracht.

Unterhalb des hinteren Dachteiles 4 befindet sich ein Hutablagedeckel 6, der einen darunter liegenden Verdeckkasten 8 überdecken kann, der zur Aufnahme der Dachteile bei abgelegtem Fahrzeugdach ausgebildet ist. Der Hutablagedeckel 6 ist verschwenkbar ausgebildet und insbesondere über ein karosserieseitiges Drehgelenk schwenkbar an die Fahrzeugkarosserie gekoppelt und wird zur Ablage des Fahrzeugdaches aus der horizontalen Schließposition in eine aufgeschwenkte Öffnungsposition überführt. Nach der Ablage des Fahrzeugdaches im Verdeckkasten 8 wird der Hutablagedeckel wieder in seine ursprüngliche, horizontale Schließposition überführt.

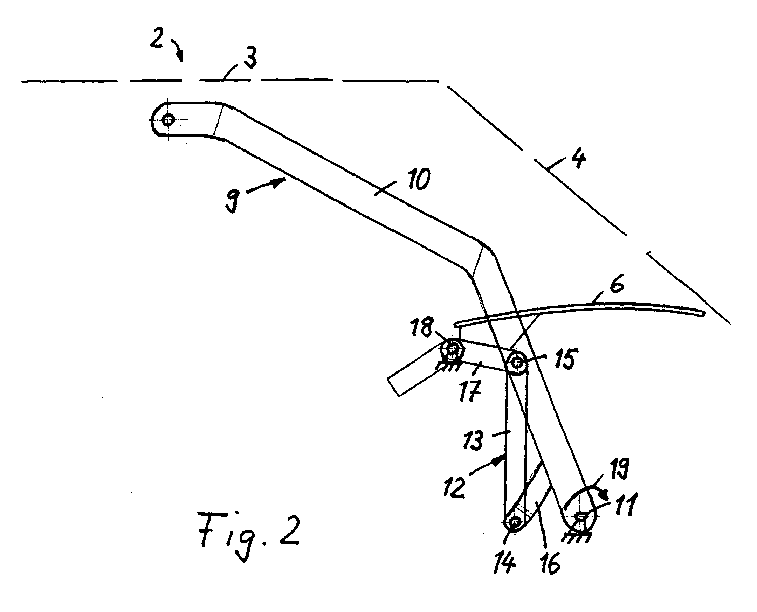

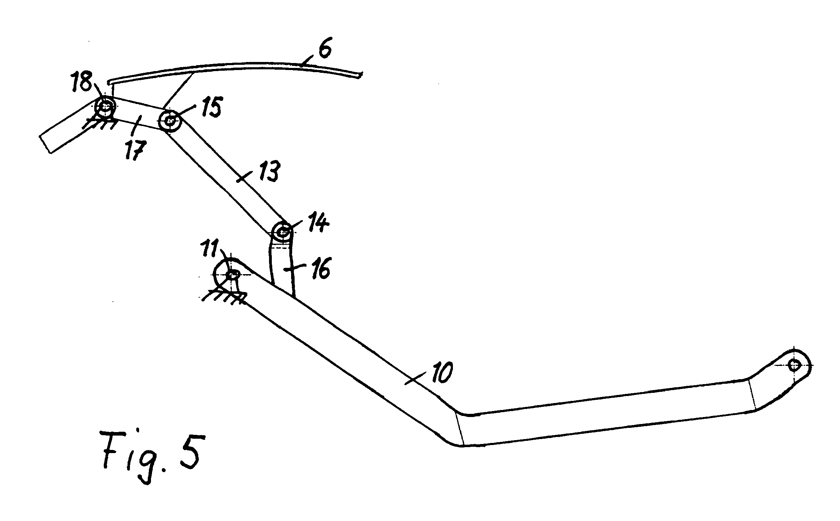

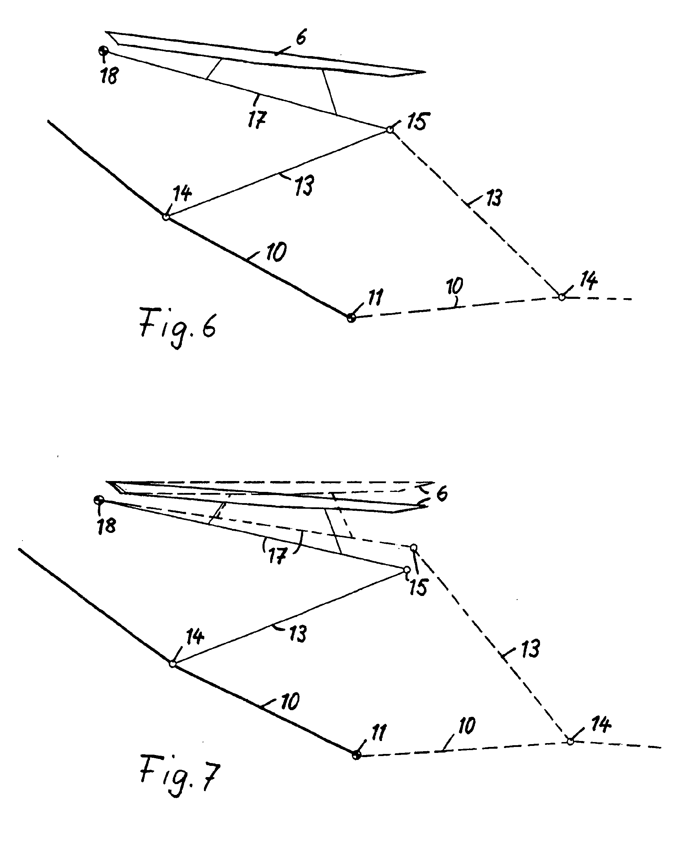

In den Figuren 2 bis 5 ist ein erstes Ausführungsbeispiel für die Kinematik des Fahrzeugdaches 2 und des Hutablagedeckels 6 und der zwischengeschalteten Koppelkinematik 12 dargestellt. Die Dachteile 3 und 4 des Fahrzeugdaches 2 werden mithilfe einer Dachkinematik 9 verstellt, die einen Hauptlenker 10 umfasst, welcher über ein karosserieseitiges Drehgelenk 11 schwenkbar an die Fahrzeugkarosserie angebunden ist. Zur Überführung aus der in Fig. 2 dargestellten Schließposition des Daches in die in Fig. 5 dargestellte Ablage- bzw. Öffnungsposition wird der Hauptlenker 10 um die Drehachse des karosserieseitigen Drehgelenks wie mit Pfeilrichtung 19 dargestellt (Fig. 2) nach hinten in Richtung Fahrzeugheck bis in den Verdeckkasten hinein verschwenkt. Die Aufschwenkbewegung des Hutablagedeckels 6 verläuft gegensinnig zur Ablagebewegung des Hauptlenkers 10 und des Fahrzeugdaches.

Der Hutablagedeckel 6 ist fest mit einem Hutablagelenker 17 gekoppelt, der über ein karosserieseitiges Drehgelenk 18 schwenkbar an die Fahrzeugkarosserie angekoppelt ist. Zwischen der Kinematik des Hutablagedeckels 6, also dem Hutablagelenker 17, und der Dachkinematik 9 ist eine Koppelkinematik 12 geschaltet, die die Bewegung des Hutablagelenkers 17 an die Bewegung der Dachkinematik 9 zwangskoppelt. Die Koppelkinematik 12 besteht im Ausführungsbeispiel gemäß den Figuren 2 bis 5 aus nur einem Verbindungslenker 13, der einenends über ein Drehgelenk 14 schwenkbar an einem Fortsatz 16 des Hauptlenkers 10 und anderenends über ein weiteres Drehgelenk 15 schwenkbar mit dem Hutablagelenker 17 verbunden ist. Darüber hinaus erfährt der Verbindungslenker 13 keine weiteren Führungen. Der Fortsatz 16 am Hauptlenker 10 ist fest mit dem Hauptabschnitt des Hauptlenkers verbunden, wobei das Drehgelenk 14 zwischen dem Fortsatz 16 und dem Verbindungslenker 13 auf Abstand zum karosserieseitigen Drehgelenk 11 des Hauptlenkers angeordnet ist. Die Verbindung über die Koppelkinematik 12 führt zu einer kinematisch eindeutig festgelegten Bewegung des Hutablagedeckels 6 in Abhängigkeit von der Dachbewegung, die über eine Schwenkbewegung der Dachkinematik 9 erzeugt wird.

Sämtliche Drehachsen sind in den Ausführungsbeispielen parallel zueinander angeordnet und verlaufen in Fahrzeugquerrichtung. Das karosserieseitige Drehgelenk 11 des Hauptlenkers 10 der Dachkinematik 9 liegt in Vertikalrichtung gesehen unterhalb des karosserieseitigen Drehgelenks 18 des Hutablagelenkers 17 und außerdem in Fahrzeugvorwärtsrichtung gesehen hinter dem Drehgelenk 18.

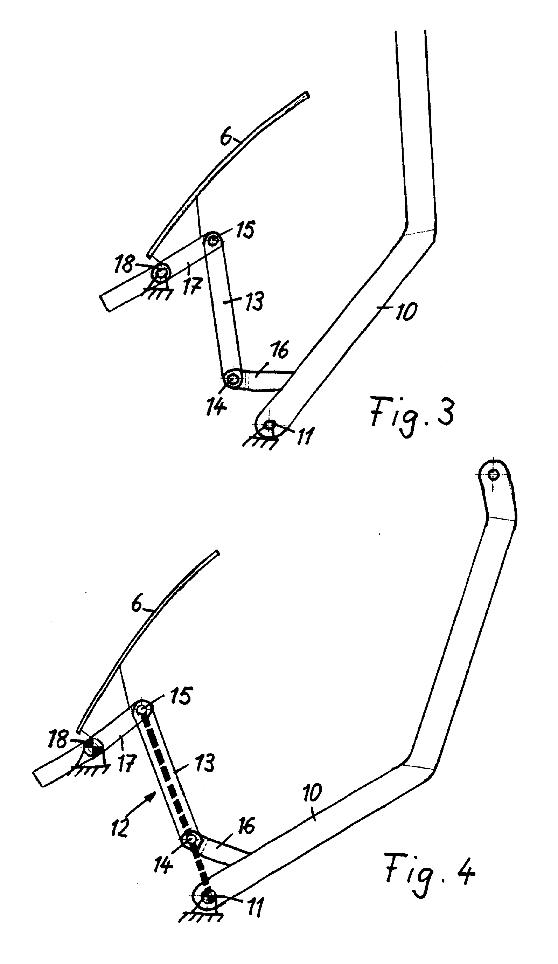

In Fig. 3 ist die gesamte Kinematik in einer ersten Zwischenposition bei der Überführungsbewegung von der Schließ- in die Ablageposition dargestellt. Der Hauptlenker 10 ist bereits um ein Stück nach hinten in Richtung Ablageposition verschwenkt, zugleich ist der Hutablagedeckel 6 um sein karosserieseitiges Drehgelenk 18 in eine aufgeschwenkte Position verstellt worden. Die Schwenkbewegungen von Hauptlenker 10 der Dachkinematik und Hutablagedeckel 6 sind entgegengesetzt zueinander gerichtet. Durch das Aufschwenken des Hutablagedeckels 6 wird zum einen Platz geschaffen für die Ablagebewegung des Fahrzeugdaches, zum anderen wird ein Durchtritt in den Verdeckkasten hinein freigegeben. Der Hutablagedeckel 6 überdeckt sowohl in der Schließposition als auch in der Ablageposition des Fahrzeugdaches die Öffnung des Verdeckkastens zumindest teilweise.

In Fig. 4 ist die Koppelkinematik 12 in einer Streck- bzw. Totpunktlage dargestellt. In dieser Strecklage liegen die beiden endseitigen Drehgelenke 14 und 15 des Verbindungslenkers 13 in einer Linie mit dem karosserieseitigen Drehgelenk 11 des Hauptlenkers 10. In der Strecklage befindet sich der Hutablagedeckel 6 in seiner am weitesten aufgeschwenkten Position; mit Überschreitung der Strecklage wird die Bewegung des Hutablagedeckels 6 umgekehrt und der Hutablagedeckel wird wieder in Richtung seiner Ausgangsposition zurückverschwenkt, wobei diese Schließbewegung des Hutablagedeckels 6 gleichsinnig wie die Ablagebewegung der Dachkinematik und der Dachteile erfolgt.

In Fig. 5 ist die Ablageposition erreicht, in der der Hauptlenker 10 - einschließlich der in Fig. 5 nicht dargestellten Dachteile - im Verdeckkasten abgelegt ist. Der Hutablagedeckel 6 hat wieder eine horizontale Position erreicht, in der der Verdeckkasten vorteilhaft zumindest teilweise überdeckt wird. Diese Position des Hutablagedeckels 6 kann mit der Ausgangsposition, die der Schließstellung des Daches zugeordnet ist, übereinstimmen, gegebenenfalls aber auch hiervon abweichen.

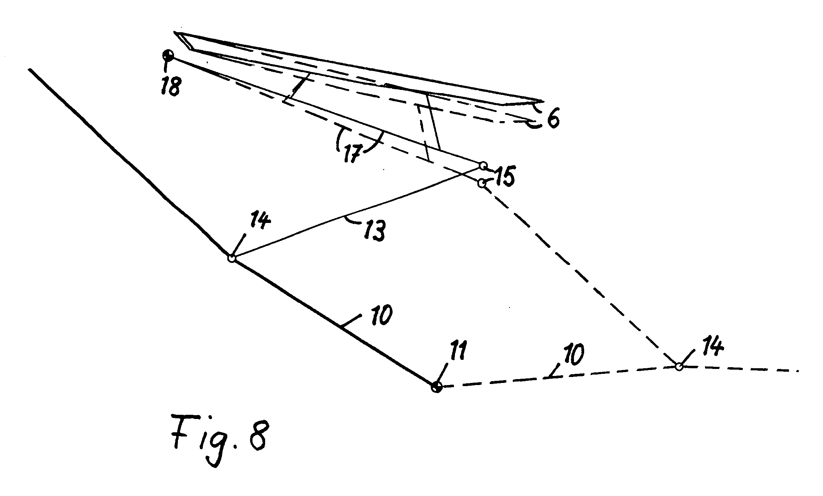

In den Figuren 6 bis 8 sind verschiedene Ablagesituationen für den Hutablagedeckel 6 dargestellt, jeweils für die Schließposition und für die Ablageposition des Fahrzeugdaches. Die Schließposition des Fahrzeugdaches ist mit durchgezogenem Strich dargestellt, die Ablageposition mit strichlierter Linie.

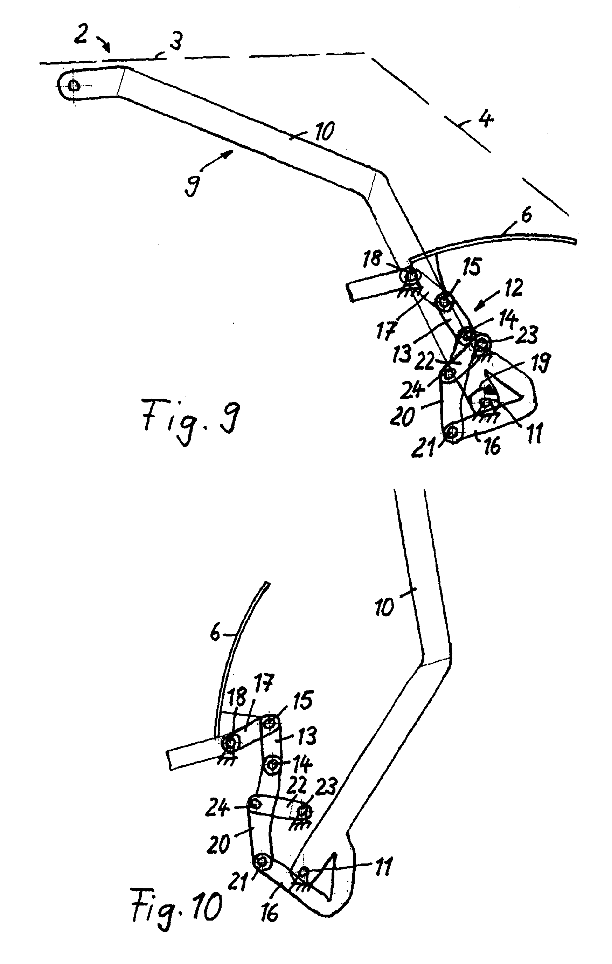

Fig. 6 stellt eine erste Ausführungsvariante dar, bei der der Hutablagedeckel 6 in Schließposition des Daches und in Ablageposition jeweils die gleiche Position einnimmt. Gemäß der Ausführungsvariante nach Fig. 7 ist dagegen vorgesehen, dass in Ablageposition des Daches sich der Hutablagedeckel 6 oberhalb der Hutablageposition befindet, die der Schließposition des Daches zugeordnet ist. In Fig. 8 verhält es sich umgekehrt: In Ablageposition des Daches liegt der Hutablagedeckel 6 unterhalb der Position der Hutablage, die der Schließposition des Daches zugeordnet ist.

In den Figuren 9 bis 13 ist ein weiteres Ausführungsbeispiel mit einer modifizierten Koppelkinematik 9 dargestellt, die zusätzlich zum Verbindungslenker 13 auch noch einen Koppellenker 20 und einen Stützlenker 22 umfasst. Der Vorteil dieser Ausführung mit insgesamt drei Lenkern der Koppelkinematik zwischen der Dachkinematik 9 zur Verstellung der Dachteile 3 und 4 des Fahrzeugdaches 2 und der Kinematik des Hutablagedeckels 6, bestehend aus dem Hutablagelenker 17, welcher um das karosserieseitige Drehgelenk 18 verschwenkbar ist, besteht in der größeren geometrischen Freiheit im Hinblick auf die Wahl der Drehpunkte der Lenker.

In Fig. 9 ist die Schließposition des Fahrzeugdaches 2 dargestellt, in der der Hutablagedeckel 6 sich unmittelbar unterhalb des hinteren Dachteiles 4 in einer horizontalen Ausgangslage befindet. Bei einer Betätigung der Dachkinematik 9, bei der der Hauptlenker 10 der Dachkinematik um das karosserieseitige Drehgelenk 11 wie in Fig. 9 mit Pfeilrichtung 19 angedeutet nach hinten verschwenkt wird, wird über die Koppelkinematik 12 automatisch auch eine zwangsgeführte Aufstellbewegung des Hutablagedeckels 6 erreicht. Es handelt sich um eine kinematisch eindeutig festgelegte Bewegung ohne überzählige Freiheitsgrade. Der Verbindungslenker 13 greift über das Drehgelenk 15 am Hutablagelenker 17 an, der fest mit dem Hutablagedeckel 6 gekoppelt ist und über das karosserieseitige Drehgelenk 18 in eine aufgeschwenkte Lage zu verstellen ist, die in den Figuren 10 bis 12 dargestellt ist. Die Aufschwenkbewegung des Hutablagedeckels 6 um das karosserieseitige Drehgelenk 18 ist gegenläufig zur Ablagebewegung des Hauptlenkers 10 der Dachkinematik 9.

Auf der dem Hutablagelenker 17 gegenüberliegenden Seite ist der Verbindungslenker 13 über das Drehgelenk 14 mit dem Koppellenker 20 drehbar verbunden, welcher wiederum auf der gegenüberliegenden Stirnseite über ein weiteres Drehgelenk 21 schwenkbar mit dem Fortsatz 16 am Hauptlenker 10 drehgekoppelt ist. Zur Bindung überzähliger Bewegungsfreiheitsgrade erfährt der Koppellenker 20 über den Stützlenker 22 eine Abstützung gegenüber der Fahrzeugkarosserie. Der Stützlenker 22 ist einenends über ein Drehgelenk 24 schwenkbar mit dem Koppellenker 20 verbunden und anderenends über ein karosserieseitiges Drehgelenk 23 schwenkbar an die Fahrzeugkarosserie angebunden.

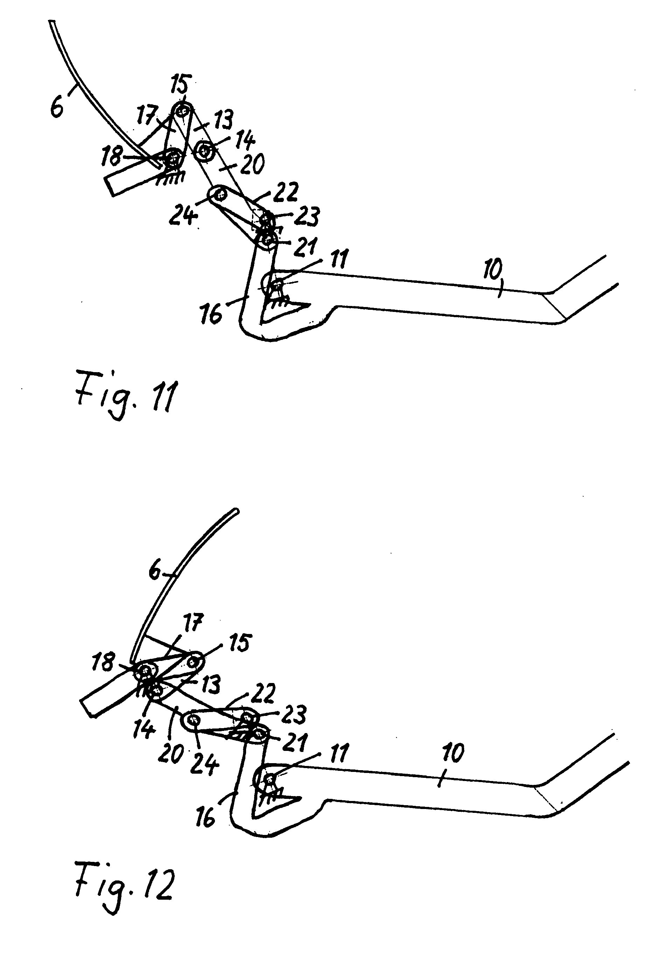

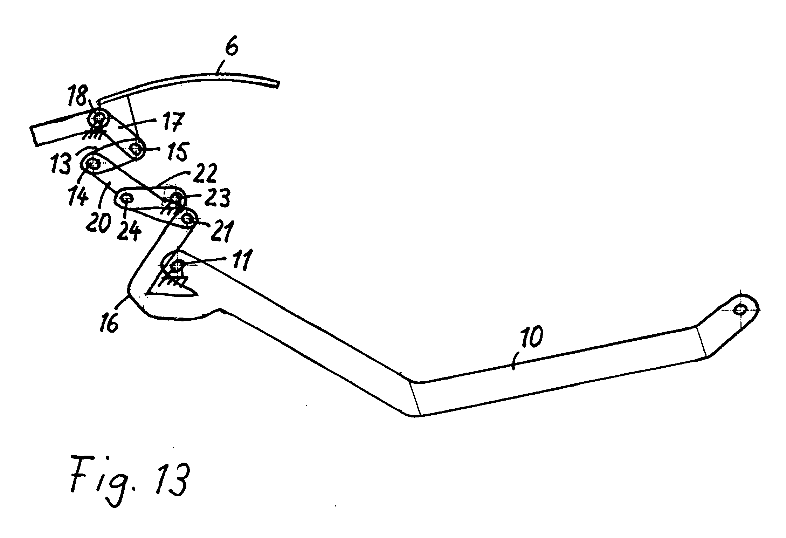

Während der Ablagebewegung des Daches durchläuft die Koppelkinematik 12 eine Totpunkt- bzw. Strecklage, die in Fig. 11 dargestellt ist. In der Strecklage liegen die Drehgelenke 14 und 15 an den stirnseitigen Enden des Verbindungslenkers 13 in einer gemeinsamen Linie mit dem Drehgelenk 21 zwischen Koppellenker 20 und dem Fortsatz 16 am Hauptlenker 10. Diese Strecklage kennzeichnet zugleich die am weitesten aufgeschwenkte Position des Hutablagedeckels 6. Bei einem weiteren Verschwenken des Hauptlenkers 10 um sein karosserieseitiges Drehgelenk 11 in Richtung Ablageposition wird die Strecklage der Koppelkinematik überschritten und der Hutablagedeckel 6 wieder in Richtung seiner ursprünglichen, horizontalen Ausgangsposition verschwenkt, die in Fig. 13 dargestellt ist. Diese Endposition des Hutablagedeckels 6 entspricht derjenigen der Ausgangslage bei geschossenem Fahrzeugdach, kann aber gegebenenfalls auch geringfügig hiervon abweichen und oberhalb oder unterhalb der Ausgangslage liegen.

Auch beim Ausführungsbeispiel gemäß den Figuren 9 bis 13 liegt das karosserieseitige Drehgelenk 18 des Hutablagedeckels 6 sowohl oberhalb des karosserieseitigen Drehgelenks 11 des Hauptlenkers 10 der Dachkinematik als auch in Fahrzeugvorwärtsrichtung gesehen weiter vorne.

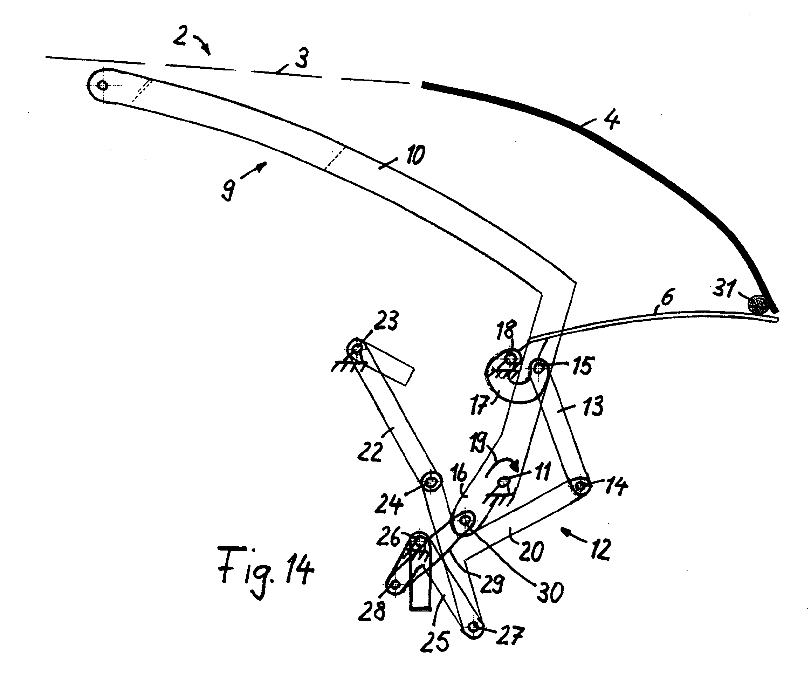

In den Figuren 14 bis 19 ist ein weiteres Ausführungsbeispiel mit einer mehrteiligen Koppelkinematik 12 zwischen der Dachkinematik 9 des Fahrzeugdaches 2 und dem Hutablagedeckel 6 dargestellt. Die Dachkinematik 9 mit dem um das karosserieseitig angeschlagene Drehgelenk 11 verschwenkbaren Hauptlenker 10 trägt das Fahrzeugdach 2 mit den Dachteilen 3 und 4, wobei in der Schließposition (Fig. 14) unmittelbar unterhalb des hinteren Dachteiles 4 der näherungsweise horizontal abgelegte Hutablagedeckel 6 sich bis zum unteren Rand des hinteren Dachteiles erstreckt. Für einen wind- und wasserdichten Abschluss ist entlang der Unterkante, auf der Innenseite des hinteren Dachteiles, ein Dichtelement 31 zur Abdichtung gegenüber dem Hutablagedeckel 6 vorgesehen.

Der Hutablagedeckel 6 ist um das karosserieseitig angeschlagene Drehgelenk 18 verschwenkbar. Die Drehbewegungen des Hauptlenkers 10 der Dachkinematik 9 und des Hutablagedeckels 6 sind über die Koppelkinematik 6 kinematisch zwangsgekoppelt. Bei der Ablagebewegung des Fahrzeugdaches 2 wird der Hauptlenker 10 der Dachkinematik 9 wie mit Pfeilrichtung 19 dargestellt um das karosserieseitige Drehgelenk 11 verschwenkt; zugleich wird der Hutablagedeckel 6, der fest am Hutablagelenker 17 angebunden ist, um das karosserieseitige Drehgelenk 18 in gegenläufiger Richtung aufgeschwenkt. Die Koppelkinematik 12 umfasst neben dem Verbindungslenker 13, der über das Drehgelenk 15 am Hutablagelenker 17 schwenkbar angreift, den ersten Koppellenker 20, den karosserieseitig abgestützten ersten Stützlenker 22, einen zweiten Koppellenker 29 sowie einen zweiten, karosserieseitig abgestützten Stützlenker 25. Der Verbindungslenker 13 ist auf seiner dem Hutablagelenker 17 abgewandten Seite über das Drehgelenk 14 mit dem ersten Koppellenker 20 verbunden, der im Ausführungsbeispiel T-förmig ausgebildet ist, wobei sich das Drehgelenk 14 zum Verbindungslenker 13 am mittleren T-Abschnitt befindet. Der erste Koppellenker 20 weist zwei weitere Drehgelenke 24 und 27 am quer verlaufenden Abschnitt auf, wobei über das Drehgelenk 24 eine Drehkopplung an den ersten Stützlenker 22 erfolgt, welcher seinerseits über das karosserieseitige Drehgelenk 23 abgestützt ist, und über das gegenüberliegende Drehgelenk 27 eine Drehkopplung mit dem zweiten Stützlenker 25 erfolgt, der über ein karosserieseitiges Drehgelenk 26 an der Fahrzeugkarosserie abgestützt ist. Dieser zweite Stützlenker 25 ist spitzwinklig ausgeführt, wobei das karosserieseitige Drehgelenk 26 sich im mittleren Abschnitt des Stützlenkers befindet. Gegenüberliegend zum Drehgelenk 27, über das die Verbindung mit dem T-förmigen, ersten Koppellenker 20 durchgeführt wird, ist der zweite Stützlenker 25 über ein weiteres Drehgelenk 28 schwenkbar mit dem zweiten Koppellenker 29 verbunden. Dieser zweite Koppellenker 29 ist auf der dem zweiten Stützlenker 25 abgewandten Seite über ein weiteres Drehgelenk 30 schwenkbar mit dem Fortsatz 16 am Hauptlenker 10 verbunden. Das Drehgelenk 30 liegt hierbei mit Abstand zum karosserieseitigen Drehgelenk 11 des Hauptlenkers 10.

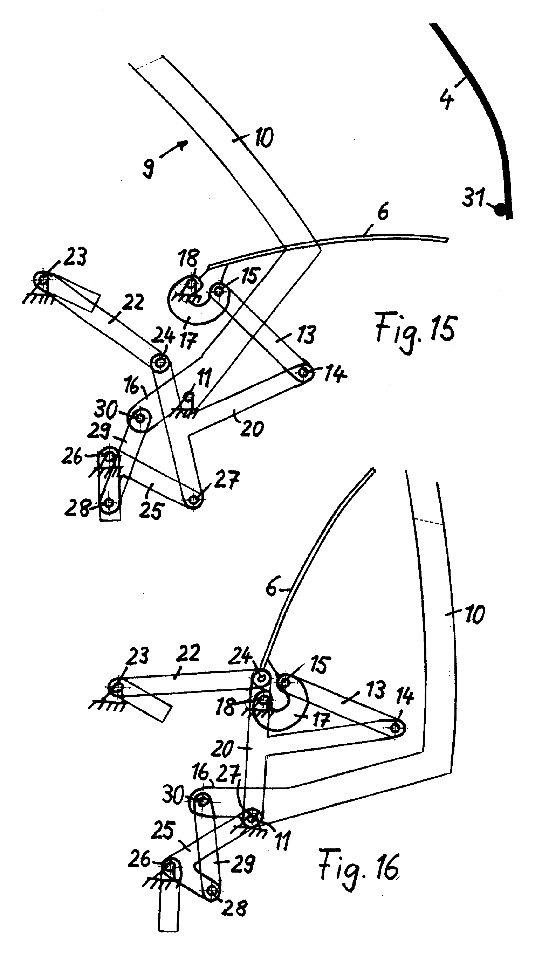

Die beiden karosserieseitigen Drehgelenke 23 und 26 am ersten und zweiten Stützlenker 22 bzw. 25 bilden gemeinsam mit den Drehgelenken 24 und 27 des sie verbindenden, zwischenliegenden Koppellenkers 20 ein Viergelenk, das über den zweiten Koppellenker 29 vom Hauptlenker 10 angetrieben wird. Der Vorteil dieser Ausführung ist darin zu sehen, dass das Drehgelenk 14, über das der mittlere Abschnitt des T-förmigen ersten Koppellenkers 20 mit dem ersten Verbindungslenker 13 schwenkbar verbunden ist, während der anfänglichen Ablagebewegung des Fahrzeugdaches zunächst eine Kreisbahn um das gegenüberliegende Drehgelenk 15 beschreibt, über das der erste Verbindungslenker 13 schwenkbar an den Hutablagelenker 17 verbunden ist, so dass während dieser anfänglichen Ablagebewegung des Fahrzeugdaches trotz der Bewegung der Koppelkinematik 12 zunächst keine Bewegungsübertragung auf den Hutablagelenker 17 erfolgt und der Hutablagedeckel 6 zunächst in seiner Ausgangslage verbleibt. Diese Situation ist in Fig. 15 dargestellt.

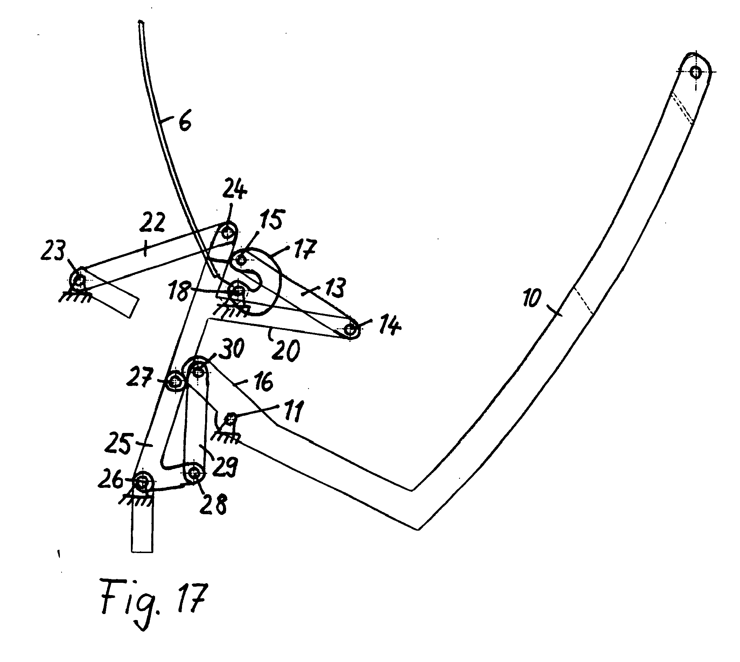

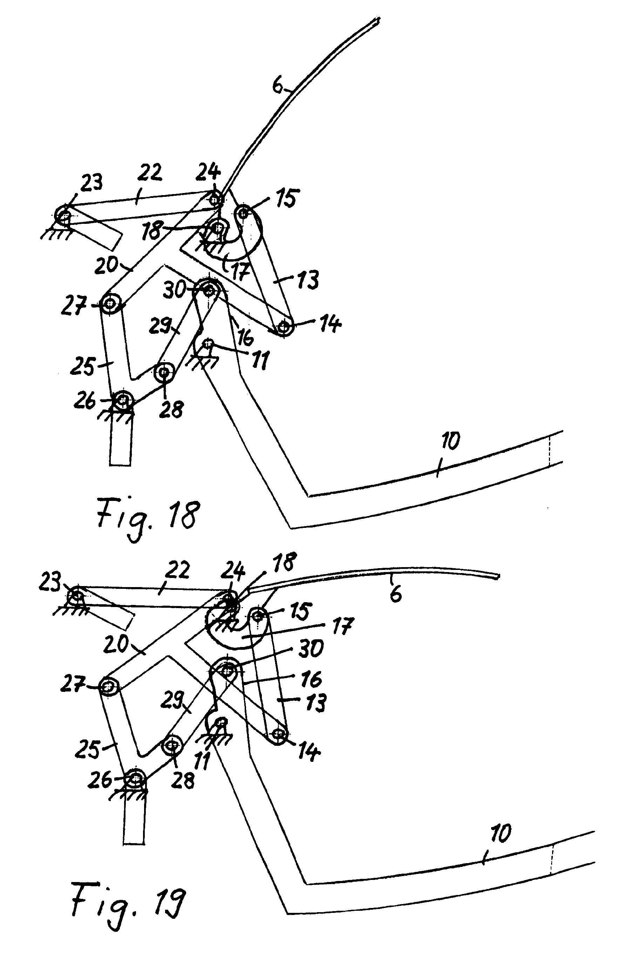

Erst im weiteren Verlauf der Ablagebewegung gemäß den Figuren 16 bis 19 erfolgt eine wirksam werdende Bewegungsübertragung der Dachablagebewegung über die Koppelkinematik auf den Hutablagedeckel 6, so dass der Hutablagedeckel 6 um sein karosserieseitiges Drehgelenk 18 in gegenläufiger Richtung zur Ablagebewegung des Hauptlenkers 10 aufgeschwenkt wird. In der maximal aufgeschwenkten Position, dargestellt in Fig. 17, erreicht die Koppelkinematik eine Streck- bzw. Totpunktlage. In dieser Totpunktlage stehen die beiden Drehgelenke 24 und 27 des ersten Koppellenkers 20, über die die Anbindung an den ersten Stützlenker 22 und den zweiten Stützlenker 25 erfolgt, in einer gemeinsamen Linie mit dem karosserieseitigen Drehgelenk 26 des zweiten Stützlenkers 25. Mit dem Überschreiten dieser Strecklage erfolgt eine Bewegungsumkehrung des Hutablagedeckels 6, der nunmehr, wie in den Figuren 18 und 19 dargestellt, sich in gleicher Richtung wie der Hauptlenker 10 der Dachkinematik bewegt und wieder in Richtung seiner Ausgangsposition verstellt wird. Sobald das Fahrzeugdach einschließlich Dachkinematik die Ablageposition erreicht hat (Fig. 19), erreicht auch der Hutablagedeckel 6 seine zumindest näherungsweise horizontale Endlage, die in der Regel mit der Ausgangslage bei geschlossenem Fahrzeugdach übereinstimmt, gegebenenfalls aber auch hiervon abweichen kann, so dass auch eine Endlage oberhalb oder unterhalb der Ausgangslage möglich ist.

### Bezugszeichenliste

1 Cabriolet-Fahrzeug
2 Fahrzeugdach
3 vorderes Dachteil
4 hinteres Dachteil
5 Heckscheibe
6 Hutablagedeckel
7 Windschutzscheibenrahmen
8 Verdeckkasten
9 Dachkinematik
10 Hauptlenker
11 karosserieseitiges Drehgelenk
12 Koppelkinematik
13 Verbindungslenker
14 Drehgelenk
15 Drehgelenk
16 Fortsatz
17 Hutablagelenker
18 karosserieseitiges Drehgelenk
19 Pfeilrichtung
20 Koppellenker
21 Drehgelenk
22 Stützlenker
23 karosserieseitiges Drehgelenk
24 Drehgelenk
25 zweiter Stützlenker
26 karosserieseitiges Drehgelenk
27 Drehgelenk
28 Drehgelenk
29 zweiter Koppellenker
30 Drehgelenk
31 Dichtelement

## Patentansprüche

1. Verstellbares Fahrzeugdach, mit mindestens einem an eine karosserieseitig angeschlagene Dachkinematik (9) gekoppelten Dachteil (3, 4), das bei einer Betätigung der Dachkinematik (9) zwischen einer den Fahrzeuginnenraum überdeckenden Schließposition und einer Ablageposition zu verstellen ist, und mit einem Hutablagedeckel (6), der verschwenkbar gelagert und über eine Koppelkinematik (12) an die Dachkinematik (9) gekoppelt ist, wobei die Koppelkinematik (12) einen Verbindungslenker (13) umfasst, der schwenkbar mit dem Hutablagedeckel (6) verbunden ist, wobei die Koppelkinematik (12) bei der Überführung des Fahrzeugdaches (2) zwischen Schließ- und Ablageposition eine Strecklage durchläuft,
**dadurch gekennzeichnet,**
**dass** der Hutablagedeckel (6) um ein karosseriefestes Drehgelenk (11, 18, 23, 26) aufschwenkbar ist, dass die Koppelkinematik (12) ausschließlich über Drehgelenke gekoppelte Lenker (13, 20, 22) umfasst und dass im kinematischen Übertragungsweg zwischen Hutablagedeckel (6) und Dachkinematik (9) höchstens drei Lenker (13, 20, 22) angeordnet sind, wobei der an der Hutablage (6) schwenkbar gekoppelte Verbindungslenker (13) bei der Überführung zwischen Schließ- und Ablageposition die Strecklage durchläuft.

2. Fahrzeugdach nach Anspruch 1,
**dadurch gekennzeichnet,**
**dass** die Koppelkinematik (12) ausschließlich aus dem Verbindungslenker (13) besteht, der einenends schwenkbar mit dem Hutablagedeckel (6) und anderenends schwenkbar mit einem Bauteil der Dachkinematik (9) verbunden ist.

3. Fahrzeugdach nach Anspruch 1,
**dadurch gekennzeichnet,**
**dass** die Koppelkinematik (12) zusätzlich zum Verbindungslenker (13) einen Koppellenker (20) umfasst, der einenends schwenkbar mit dem Verbindungslenker (13) und anderenends schwenkbar mit einem Bauteil der Dachkinematik (9) verbunden ist.

4. Fahrzeugdach nach Anspruch 3,
**dadurch gekennzeichnet,**
**dass** der Koppellenker (20) an einem karosserieseitigen Drehgelenk (23) abgestützt ist.

5. Fahrzeugdach nach Anspruch 4,
**dadurch gekennzeichnet,**
**dass** das karosserieseitige Drehgelenk (23) an einem Stützlenker (22) angeordnet ist, der anderenends schwenkbar mit dem Koppellenker (20) verbunden ist.

6. Fahrzeugdach nach Anspruch 4,
**dadurch gekennzeichnet,**
**dass** sich das karosserieseitige Drehgelenk (23) unmittelbar am Koppellenker (20) befindet.

7. Fahrzeugdach nach einem der Ansprüche 1 bis 6,
**dadurch gekennzeichnet,**
**dass** ein Lenker (13, 20) der Koppelkinematik (20) unmittelbar an die Dachkinematik (9) gekoppelt ist.

8. Fahrzeugdach nach einem der Ansprüche 1 bis 7,
**dadurch gekennzeichnet,**
**dass** das karosserieseitige Drehgelenk (18) des Hutablagedeckels (6) in Vertikalrichtung gesehen oberhalb des karosserieseitigen Drehgelenks (11) der Dachkinematik (9) angeordnet ist.

9. Fahrzeugdach nach einem der Ansprüche 1 bis 8,
**dadurch gekennzeichnet,**
**dass** das karosserieseitige Drehgelenk (18) des Hutablagedeckels (6) in Fahrzeugvorwärtsrichtung gesehen vor dem karosserieseitigen Drehgelenk (11) der Dachkinematik (9) angeordnet ist.

10. Fahrzeugdach nach einem der Ansprüche 1 bis 9,
**dadurch gekennzeichnet,**
**dass** der Hauptlenker (10) der Dachkinematik (9) und der Hutablagedeckel (6) bei der Überführung des Daches zwischen Schließ- und Ablageposition bis zum Erreichen der Strecklage der Koppelkinematik (12) entgegengesetzt gerichtete Schwenkbewegungen und nach dem Überschreiten der Strecklage gleichsinnige Schwenkbewegungen ausführen.
